# EUROPEAN PATENT SPECIFICATION

(11) **EP 4 421 952 B1**
(45) Date of publication and mention of the grant of the patent: **29.04.2026**
(21) Application number: 22883507.0
(22) Date of filing: 14.10.2022
(51) Int. Cl.: H01M 50/107, H01M 50/342, H01M 50/167, H01M 50/184, H01M 50/56, H01M 50/152, H01M 50/171

(54) **CYLINDRICAL BATTERY**
ZYLINDRISCHE BATTERIE
BATTERIE CYLINDRIQUE

(30) Priority: 20.10.2021 JP 2021171523
(43) Date of publication of application: 28.08.2024
(73) Proprietor: Panasonic Energy Co., Ltd., Osaka 570-8511 (JP); Panasonic Holdings Corporation, Osaka 571-8501 (JP)
(72) Inventor: MIHARA, Satoru, Osaka 571-0057 (JP); OKUTANI, Oose, Osaka 571-0057 (JP); HASHIMOTO, Junya, Osaka 571-0057 (JP)
(74) Representative: Eisenführ Speiser
(86) International application number: PCT/JP2022/038427
(87) International publication number: WO 2023/068203

(56) References cited:
- WO-A1-2012/153675
- CN-A- 104 103 778
- JP-A- 2004 259 456
- JP-A- 2006 338 979
- JP-A- 2012 243 725
- JP-A- H06 140 011

## Description

### TECHNICAL FIELD

The present disclosure generally relates to a cylindrical battery.

### BACKGROUND ART

In recent years, there has been a demand for a battery with high energy density. The safety of the battery has also received attention increasingly according to an increase in energy density of a battery. Patent Literatures 1 to 4 each disclose a technique in which, in order to improve the safety of a battery, a groove is provided in a bottom of a cylindrical secondary battery so that rupture occurs along this groove upon the occurrence of abnormality. CN 104103778 A discloses a cylindrical battery according to the preamble of claim 1.

### CITATION LIST

### PATENT LITERATURE

PATENT LITERATURE 1: Japanese Unexamined Patent Application Publication No. Hei 06-333548
PATENT LITERATURE 2: Japanese Unexamined Patent Application Publication No. Hei 01-309252
PATENT LITERATURE 3: Japanese Unexamined Patent Application Publication No. Hei 11-213978
PATENT LITERATURE 4: Japanese Unexamined Patent Application Publication No. 2006-338979

### SUMMARY

In the cylindrical battery, the internal pressure of the battery increases even during normal usage, which may cause deformation of the bottom. Therefore, it is necessary to provide, in the bottom of the cylindrical battery, a rupture portion that opens in as wide a range as possible upon the occurrence of abnormality, while suppressing deformation during normal usage. However, the technique disclosed in each of Patent Literatures 1 to 4 still has room for improvement in deformation of the bottom of the cylindrical battery which has not been examined.

It is an advantage of the present disclosure to provide a cylindrical battery with improved safety while suppressing deformation of a bottom.

A cylindrical battery according to one aspect of the present disclosure comprises an electrode assembly, an electrolyte, a bottomed cylindrical exterior housing can that houses the electrode assembly and the electrolyte, and a sealing assembly with which an opening of the exterior housing can is capped, wherein a bottom of the exterior housing can includes a first groove that forms a polygon, and a plurality of second grooves that extend outward from each of a plurality of vertices of the polygon.

According to the present disclosure, the cylindrical battery can achieve both of suppression of deformation of a bottom and improvement in safety.

### BRIEF DESCRIPTION OF DRAWING

FIG. 1 is a longitudinal sectional view of a cylindrical secondary battery which is an example of an embodiment.
FIG. 2 is a bottom view of the cylindrical secondary battery which is an example of an embodiment.
FIG. 3 is a perspective view of a bottom of an exterior housing can that has been cleaved upon the occurrence of abnormality, in the cylindrical secondary battery of FIG. 2.
FIG. 4A is a schematic view illustrating a groove formed in the bottom of the cylindrical secondary battery which is an example of an embodiment.
FIG. 4B is a schematic view illustrating a groove formed in the bottom of the cylindrical secondary battery which is an example of an embodiment.
FIG. 4C is a schematic view illustrating a groove formed in the bottom of the cylindrical secondary battery which is an example of an embodiment.
FIG. 4D is a schematic view illustrating a groove formed in the bottom of the cylindrical secondary battery which is an example of an embodiment.
FIG. 4E is a schematic view illustrating a groove formed in the bottom of the cylindrical secondary battery which is an example of an embodiment.

### DESCRIPTION OF EMBODIMENTS

Hereinafter, an example of an embodiment of a cylindrical battery according to the present disclosure will be described in detail with reference to the drawings. In the following description, specific shapes, materials, values, directions, and the like are examples given for facilitating understanding of the present invention and can be appropriately changed according to specifications of cylindrical batteries. When a plurality of embodiments and modified examples are included in the following description, it is assumed from the beginning that those feature portions are appropriately combined to be used.

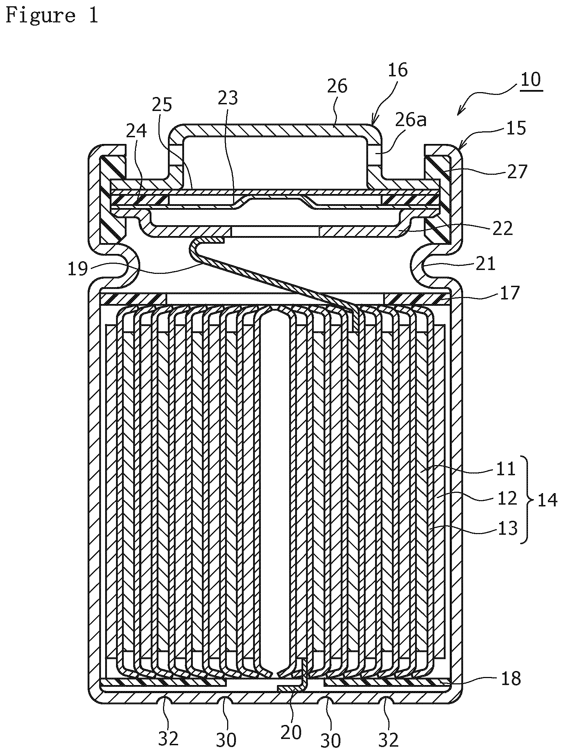

FIG. 1 is a longitudinal sectional view of a cylindrical secondary battery 10 which is an example of an embodiment. The cylindrical secondary battery 10 comprises an electrode assembly 14, an electrolyte (not illustrated), a bottomed cylindrical exterior housing can 15 that houses the electrode assembly 14 and the electrolyte, and a sealing assembly 16 with which an opening of the exterior housing can 15 is capped. In the following description, a direction along an axial direction of the exterior housing can 15 is referred to as a "longitudinal direction", the sealing assembly 16 side is referred to as "upper", and the bottom side of the exterior housing can 15 is referred to as "lower". Additionally, a direction perpendicular the axial direction of the exterior housing can 15 is referred to as a "lateral direction", a radially center side of the exterior housing can 15 is referred to as an "inner side", and a radially outer side thereof is referred to as an "outer side".

The electrode assembly 14 has a wound structure in which a positive electrode 11 and a negative electrode 12 are wound with a separator 13 interposed therebetween. The structure of the electrode assembly 14 is not limited to the wound type, and may be a laminated type.

The positive electrode 11 has, for example, a band-shaped positive electrode current collector and a positive electrode mixture layer formed on each surface of the positive electrode current collector. For the positive electrode current collector, a foil of a metal, such as aluminum, a film in which such a metal is disposed on a surface layer thereof, and the like are used, for example. The positive electrode mixture layer includes at least a positive electrode active material, and may additionally include a conductive agent, a binder, and the like. Examples of the positive electrode active material may include a lithium-containing transition metal oxide containing a transition metal element such as Ni. The positive electrode 11 is produced by: applying a positive electrode mixture slurry in which a positive electrode active material or the like is dispersed in a solvent to each surface of the positive electrode current collector; and then drying and rolling the positive electrode mixture layer.

The negative electrode 12 has, for example, a band-shaped negative electrode current collector and a negative electrode mixture layer formed on each surface of the negative electrode current collector. For the negative electrode current collector, a foil of a metal such as copper, a film in which such a metal is disposed on a surface layer thereof, or the like is used, for example. The negative electrode mixture layer includes at least a negative electrode active material, and may additionally include a binder, and the like. Examples of the negative electrode active material may include carbon materials such as natural graphite and artificial graphite, metal compounds such as silicon-based compounds. The negative electrode 12 is produced by: applying a negative electrode mixture slurry in which a negative electrode active material or the like is dispersed in a solvent to each surface of the negative electrode current collector; and then drying and rolling the negative electrode mixture layer.

For the separator 13, a porous sheet having an ion permeation property and an insulation property can be used. Specific examples of the porous sheet include a fine porous thin film, a woven fabric, and a nonwoven fabric. As a material of the separator 13, an olefin resin such as polyethylene and polypropylene is preferable.

An upper insulating plate 17 and a lower insulating plate 18 are disposed above and below the electrode assembly 14, respectively. A positive electrode lead 19 extends upward through a through hole of the upper insulating plate 17, and is welded with a lower surface of a filter 22, which is a bottom plate of the sealing assembly 16. In the cylindrical secondary battery 10, a cap 26, which is a top plate of the sealing assembly 16 electrically connected to the filter 22, becomes a positive electrode terminal. Meanwhile, a negative electrode lead 20 extends through a through hole of the lower insulating plate 18 toward the bottom side of the exterior housing can 15, and is welded with a bottom inner face of the exterior housing can 15. In the cylindrical secondary battery 10, the exterior housing can 15 becomes a negative electrode terminal.

The exterior housing can 15 is a bottomed cylindrical metallic exterior housing can. A thickness of the exterior housing can 15 is, for example, 0.2 mm to 0.8 mm. The exterior housing can 15 has a bottom and a side wall erected on the circumference of the bottom. The bottom of the exterior housing can 15 has a first groove 30 and second grooves 32. As described later, the first groove 30 and the second grooves 32 are ruptured when the inner pressure of the cylindrical secondary battery 10 increases upon the occurrence of abnormality, and gas is discharged through the ruptured portion. A grooved portion 21 is formed in the side wall of the exterior housing can 15. The grooved portion 21 supports the sealing assembly 16 from the lower side. The grooved portion 21 is preferably formed annularly along the circumferential direction of the exterior housing can 15.

An opening in an upper portion of the exterior housing can 15 is capped with the sealing assembly 16 via a gasket 27 and the sealing property of the interior of the cylindrical secondary battery 10 is ensured. The sealing assembly 16 has the filter 22, a lower vent member 23, an insulating member 24, an upper vent member 25, and the cap 26 which are stacked in this order from the electrode assembly 14 side. Each member constituting the sealing assembly 16 has, for example, a disk shape or a ring shape, and members except for the insulating member 24 are electrically connected to each other. The lower vent member 23 and the upper vent member 25 are connected to each other at each of central parts thereof, and the insulating member 24 is interposed between the circumferential parts of the vent members 23 and 25. When the inner pressure of the cylindrical secondary battery 10 increases upon the occurrence of abnormality, for example, the lower vent member 23 ruptures, whereby the upper vent member 25 expands toward the cap 26 side to be separated from the lower vent member 23, resulting in cutting off of an electrical connection between the both members. If the internal pressure further increases, the upper vent member 25 ruptures, and gas is discharged through an opening 26a of the cap 26.

As described above, each of the bottom of the exterior housing can 15 and the sealing assembly 16 functions as an explosion-proof vent. Which of them opens first can be designed as appropriate, without no particular limitation.

In addition to the electrode assembly 14, an electrolyte is housed in the exterior housing can 15. For the electrolyte, an aqueous electrolyte, a non-aqueous electrolyte, and the like can be used, for example, but a non-aqueous electrolyte is preferably used. Examples of a non-aqueous solvent of the non-aqueous electrolyte (organic solvent) may include carbonates, lactones, ethers, ketones, esters, and the like. Two or more of these solvents may be mixed to be used. When two or more of the solvents are mixed to be used, a mixed solvent including a cyclic carbonate and a chain carbonate is preferably used. Ethylene carbonate (EC), propylene carbonate (PC), butylene carbonate (BC), and the like may be used as the cyclic carbonate. For the chain carbonate, dimethyl carbonate (DMC), ethyl methyl carbonate (EMC), diethyl carbonate (DEC), and the like may be used. For the esters, carbonate esters such as methyl acetate (MA), and methyl propionate (MP) may be used. The non-aqueous solvent may contain a halogen-substituted product obtained by substituting at least some of hydrogen atoms in these solvents with a halogen atom such as fluorine. For the halogen-substituted product, fluoroethylene carbonate (FEC), methyl fluoropropionate (FMP), and the like may be used, for example.

For an electrolyte salt in the non-aqueous electrolyte, LiPF₆, LiBF₄, LiCF₃SO₃, lithium bis (fluorosulfonyl) imide, lithium bis (trifluoromethanesulfonyl) imide, and the like, and a mixture thereof may be used. An amount of the electrolyte salt dissolved in the non-aqueous solvent may be, for example, 0.5 mol/L to 2.0 mol/L. Vinylene carbonate (VC) or a propanesultone additive may be further added.

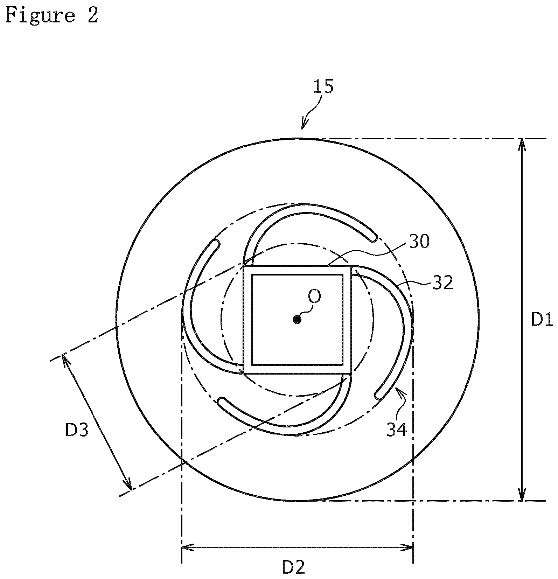

Next, the first groove 30 and the second grooves 32 formed in the bottom of the exterior housing can 15 will be described in detail with reference to FIGS. 2 to 4E.

FIG. 2 is a bottom view of the cylindrical secondary battery 10 which is an example of an embodiment. The bottom of the exterior housing can 15 (cylindrical secondary battery 10) has the first groove 30 that forms a polygon, and a plurality of second grooves 32 that extend outward from each of a plurality of vertices of the polygon. Thus, the cylindrical secondary battery 10 can achieve improvement in safety while suppressing deformation of a bottom. In the example illustrated in FIG. 2, the first groove 30 forms a square, and one second groove 32 extends from each vertex of the square.

In the cylindrical secondary battery 10, the internal pressure may increase even during normal usage. However, on the inner side of the polygon formed by the first groove 30 according to the present embodiment, the deformation can be suppressed even when the internal pressure increases. Note that a circular groove may be formed as an explosion-proof vent in the bottom of the exterior housing can 15. However, when the groove forms a circle, ease of deformation is not changed between the inner side and the outer side of the groove, which makes it impossible to suppress the deformation of the bottom of the exterior housing can 15.

The polygon formed by the first groove 30 is, for example, a regular polygon. It is only required that the polygon formed by the first groove 30 can be recognized as a polygon to the naked eye. That is, the first groove 30 is not limited to being straight, and may be curved. When the first groove 30 is curved, the first groove 30 preferably project outward.

A center of the polygon formed by the first groove 30 is substantially overlapped with a center O of the bottom of the exterior housing can 15, for example. A diameter D3 of a circumscribed circle of the polygon formed by the first groove 30 is preferably 3 mm or more. The diameter D3 of the circumscribed circle of the polygon formed by the first groove 30 and a diameter D1 of the bottom of the exterior housing can 15 have the relationship of D3/D1 ≤ 0.6, for example.

A depth of the first groove 30 is, for example, 0.1 mm to 0.5 mm, and a width of the first groove 30 is, for example, 0.1 mm to 1.0 mm. A sectional shape of the first groove 30 is not limited to a particular shape, but is a V-shape, for example. Note that the depth, width, and sectional shape of the first groove 30 may be changed in the extending direction. In this case, each of the depth and width of the first groove 30 means an average value of values measured at a plurality of points along the extending direction.

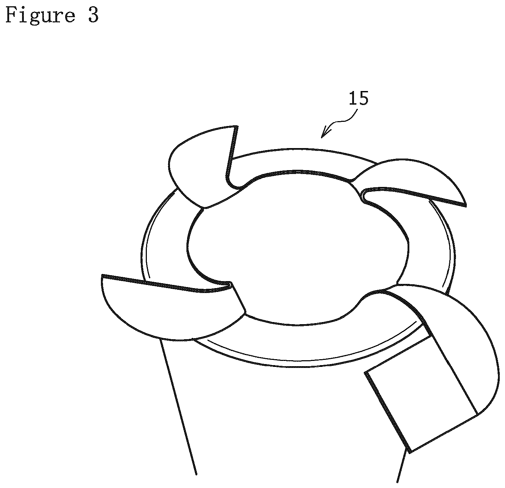

FIG. 3 is a perspective view of the bottom of the exterior housing can 15 that has been cleaved upon the occurrence of abnormality, in the cylindrical secondary battery 10 of FIG. 2. The internal pressure of the cylindrical secondary battery 10 increases rapidly upon the occurrence of abnormality such as combustion in the battery. When the internal pressure of the cylindrical secondary battery 10 reaches a predetermined value, the second grooves 32 rupture. This can form a large opening for discharging gas in the bottom of the exterior housing can 15, whereby the safety of the battery can be improved.

As illustrated in FIG. 2, each of the plurality of second grooves 32 preferably contacts only one vertex of the polygon formed by the first groove 30. This enables a portion surrounded by the first groove 30 to be anchored in the bottom of the exterior housing can 15 without being scattered, in the case where the second grooves 32 rupture.

The plurality of second grooves 32 are preferably provided on respective extension lines of sides of the polygon connected to contacts with the polygon formed by the first groove 30 in the vicinity of the contacts. This can prevent the rupture from being stopped at the contacts when the first groove 30 and the second grooves 32 rupture.

The plurality of second grooves 32 extend in the same rotation direction with respect to the center O of the bottom of the exterior housing can 15, for example. The rotation direction may be any one of clockwise and counterclockwise directions.

Finish ends 34 of the plurality of second grooves 32 are located on the same circumference, for example. Here, the finish ends 34 mean the vicinities of ends of the second grooves 32 on a side on which the first groove 30 does not contact. A center of a circle on which the plurality of finish ends 34 are located is substantially overlapped with the center O of the bottom of the exterior housing can 15, for example, and the diameter D2 of the circle and a diameter D1 of the bottom of the exterior housing can 15 have the relationship of D2/D1 ≤ 0.9, for example.

A depth of the second groove 32 is, for example, 0.1 mm to 0.5 mm, and a width of the second groove 32 is, for example, 0.1 mm to 1.0 mm. A sectional shape of the second groove 32 is not limited to a particular shape, but is a V-shape, for example. Note that the depth, width, and sectional shape of the second groove 32 may be changed in the extending direction. In this case, each of the depth and width of the second groove 32 means an average value of values measured at a plurality of points along the extending direction. The second grooves 32 and the first groove 30 have the same depth, width, and sectional shape, for example. Note that the depth, width, and sectional shape of the second grooves 32 may be different from those of the first groove 30.

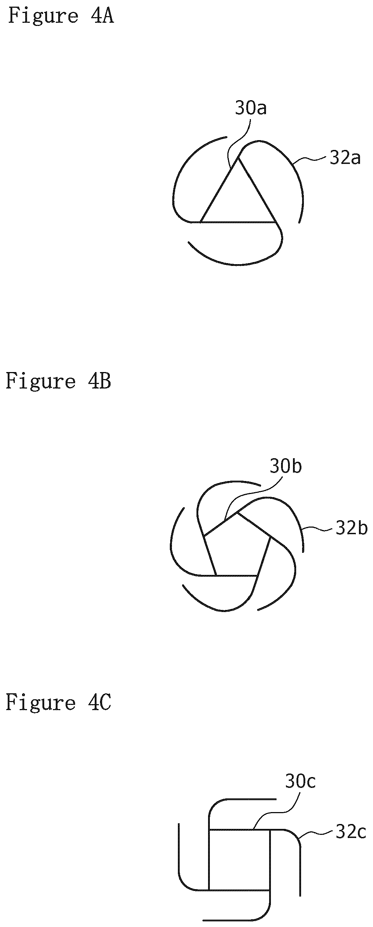

Hereinafter, other embodiments of a first groove 30 and second grooves 32 will be described with reference to each of FIGS. 4A to 4E. FIGS. 4A to 4E each are a schematic diagram illustrating another embodiment of the first groove 30 and the second grooves 32.

In the example illustrated in FIG. 4A, a first groove 30a forms a triangle, and one second groove 32a extends from each vertex of the triangle. In the example illustrated in FIG. 4B, a first groove 30b forms a pentagon, and one second groove 32b extends from each vertex of the pentagon. The polygon formed by the first groove 30 is preferably triangle to hexagon, and more preferably square to pentagon.

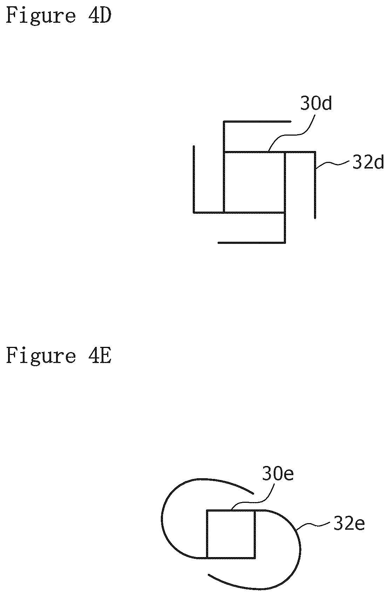

In the example illustrated in FIG. 4C, a first groove 30c forms a square, and one second groove 32c extends from each vertex of the square. The second groove 32c in FIG. 4C has a straight portion. In the example illustrated in FIG. 4D, the first groove 30d forms a square, and one second groove 32d extends from each vertex of the square. The second groove 32d in FIG. 4D is formed by two straight lines, and an intersection point of the two straight lines has an angle. The second groove 32 may have a straight portion, but is preferably formed by a curved line.

In the example illustrated in FIG. 4E, a first groove 30e forms a square, and one second groove 32e extends from two opposite vertices of the square. The second groove 32 may extend from some vertices of the polygon formed by the first groove 30, or may extend from all vertices of the polygon formed by the first groove 30. When each of the second grooves 32 extends from one vertex of the polygon, vertices of the polygon which the second grooves 32 contact preferably face each other.

The present disclosure will be further described below with Experimental Examples, but the present disclosure is not limited to these Experimental Examples.

### <Experimental Example>

### [Production of Exterior Housing Can]

A bottomed cylindrical exterior housing can having 21 mm in diameter was produced by drawing steel plate material. A first groove was provided at a center of a bottom of the exterior housing can so as to form square with a side of 6 mm. Four second grooves having a curved shape were provided to extend from all vertices of the square. At this time, the finish ends of the second grooves were provided to be located on the circumference having a diameter of 13 mm which was virtualized on a center of the bottom of the exterior housing can.

### [Operation Check of Explosion-Proof Vent]

An opening of the produced exterior housing can was capped with a sealing plate. A through hole for communicating an interior and an exterior of the exterior housing can were provided in the sealing plate. Nitrogen gas was injected into the exterior housing can through the through hole, and the internal pressure of the exterior housing can was increased until the explosion-proof vent provided in the bottom of the exterior housing can and formed by the first groove and the second grooves was activated. Then, it was visually checked that the bottom of the exterior housing can was cleaved along the first groove and the second grooves as illustrated in FIG. 3. Furthermore, it was checked that the deformation of the bottom of the exterior housing can could be suppressed until the explosion-proof vent was activated. Note that it was checked that the exterior housing can having the diameter of 46 mm or 18 mm also has the same effect as that of the above-described exterior housing can having the diameter of 21 mm.

As described above, the cylindrical battery according to the present disclosure can achieve both of suppression of deformation of a bottom and improvement in safety.

10 Cylindrical secondary battery, 11 Positive electrode, 12 Negative electrode, 13 Separator, 14 Electrode assembly, 15 Exterior housing can, 15a Marking portion, 16 Sealing assembly, 17 Upper insulating plate, 18 Lower insulating plate, 18a Base material portion, 18b Bonding portion, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 30, 30a, 30b, 30c, 30d, 30e First groove, 32, 32a, 32b, 32c, 32d, 32e Second groove, 34 Finish end

## Claims

1. A cylindrical battery (10), comprising:
an electrode assembly (14);
an electrolyte;
a bottomed cylindrical exterior housing can (15) that houses the electrode assembly (14) and the electrolyte; and
a sealing assembly (16) with which an opening of the exterior housing can (15) is capped,
wherein a bottom of the exterior housing can (15) includes a first groove (30) that forms a polygon,
and wherein the cylindrical battery (10) is **characterised by** a plurality of second grooves (32) that extend outward from each of a plurality of vertices of the polygon.

2. The cylindrical battery (10) according to claim 1, wherein
the plurality of second grooves (32) contact the plurality of second grooves (32) and the polygon at only one vertex of the polygon.

3. The cylindrical battery (10) according to claim 1 or 2, wherein
the plurality of second grooves (32) are provided on respective extension lines of sides of the polygon connected to contacts with the polygon in a vicinity of the contacts.

4. The cylindrical battery (10) according to any one of claims 1 to 3, wherein
the plurality of second grooves (32) extend in a same rotation direction with respect to a center of the bottom of the exterior housing can (15).

5. The cylindrical battery (10) according to any one of claims 1 to 4, wherein
finish ends (34) of the plurality of second grooves (32) are located on a same circumference.

## Patentansprüche

1. Zylindrische Batterie (10), mit:
einer Elektrodenanordnung (14);
einem Elektrolyt;
einem zylindrischen Außengehäuse (15) mit Boden, der die Elektrodenanordnung (14) und den Elektrolyt aufnimmt; und
einer Dichtungsanordnung (16), mit der eine Öffnung des Außengehäuses (15) verschlossen ist,
wobei ein Boden des Außengehäuses (15) eine erste Rille (30), die ein Polygon bildet, aufweist,
und wobei die zylindrische Batterie (10) **gekennzeichnet ist durch**
mehrere zweite Rillen (32), die sich von jedem der mehreren Eckpunkte des Polygons nach außen erstrecken.

2. Zylindrische Batterie (10) nach Anspruch 1, wobei
die mehreren zweiten Rillen (32) die mehreren zweiten Rillen (32) und das Polygon nur an einem Eckpunkt des Polygons berühren.

3. Zylindrische Batterie (10) nach Anspruch 1 oder 2, wobei
die mehreren zweiten Rillen (32) auf jeweiligen Verlängerungslinien von Seiten des Polygons vorgesehen sind, die mit Kontakten mit dem Polygon in einer Umgebung der Kontakte verbunden sind.

4. Zylindrische Batterie (10) nach einem der Ansprüche 1 bis 3, wobei
sich die mehreren zweiten Rillen (32) in Bezug auf einen Mittelpunkt des Bodens des Außengehäuses (15) in einer gleichen Drehrichtung erstrecken.

5. Zylindrische Batterie (10) nach einem der Ansprüche 1 bis 4, wobei
sich Enden (34) der mehreren zweiten Rillen (32) auf einem gleichen Umfang befinden.

## Revendications

1. Batterie cylindrique (10) comprenant :
un ensemble d'électrodes (14) ;
un électrolyte ;
un boîtier extérieur cylindrique à fond (15) qui loge ledit ensemble d'électrodes (14) et l'électrolyte ; et
un ensemble d'étanchéité (16) par lequel une ouverture du boîtier extérieur (15) est obturée,
dans laquelle un fond du boîtier extérieur (15) comprend une première rainure (30) qui forme un polygone, et
dans laquelle la batterie cylindrique (10) est **caractérisée par**
une pluralité de secondes rainures (32) qui s'étendent vers l'extérieur à partir de chacun de la pluralité de sommets du polygone.

2. Batterie cylindrique (10) selon la revendication 1, dans laquelle
la pluralité de secondes rainures (32) est en contact avec la pluralité de secondes rainures (32) et avec le polygone en un seul sommet du polygone.

3. Batterie cylindrique (10) selon la revendication 1 ou 2, dans laquelle
la pluralité de secondes rainures (32) est prévue sur des lignes de prolongement respectives de côtés du polygone qui sont reliées à des contacts avec le polygone dans des environs des contacts.

4. Batterie cylindrique (10) selon l'une quelconque des revendications 1 à 3, dans laquelle
la pluralité de secondes rainures (32) s'étend dans une même direction de rotation par rapport à un centre du fond du boîtier extérieur (15).

5. Batterie cylindrique (10) selon l'une quelconque des revendications 1 à 4, dans laquelle
des extrémités (34) de la pluralité de secondes rainures (32) sont situées sur une même circonférence.
